# EUROPEAN PATENT SPECIFICATION

(11) **EP 0 437 374 B1**
(45) Date of publication and mention of the grant of the patent: **27.12.1996**
(21) Application number: 91300203.6
(22) Date of filing: 11.01.1991
(51) Int. Cl.: C08F 299/02, G02B 1/04

(54) **Optical molding resin composition**
Harzzusammensetzung für optische Formverfahren
Composition de résine pour moulage optique

(30) Priority: 12.01.1990 JP 4935/90
(43) Date of publication of application: 17.07.1991
(73) Proprietor: ASAHI DENKA KOGYO KABUSHIKI KAISHA, Arakawa-ku Tokyo 116 (JP)
(72) Inventor: Ohkawa, Kazuo, Arakawa-ku, Tokyo (JP); Saito, Seiichi, Arakawa-ku, Tokyo (JP)
(74) Representative: W.P. THOMPSON & CO.

(56) References cited:
- DD-A- 225 998
- US-A- 3 701 721
- US-A- 4 391 686
- WPIL, FILE SUPPLIER, AN=84-162086, Derwent Publications Ltd, London, GB; & JP-A-59 087 126
- WPIL, FILE SUPPLIER, AN=87-119192, Derwent Publications Ltd, London, GB; & JP-A-62 062 831
- WPIL, FILE SUPPLIER, AN=84-161460, Derwent Publications Ltd, London, GB; & JP-A-59 086 001
- WPIL, FILE SUPPLIER, AN=84-162083, Derwent Publications Ltd, London, GB; & JP-A-59 087 123

## Description

The present invention relates to an optical molding resin composition curable by actinic radiation.

A hand-made model or a model made by NC cutting work with an NC milling machine is usually used as a model having a shape corresponding to the shape of an intended product and necessitated in the production of its mold or a model for profile control in cutting work or for an electrode for diesinking electrical discharge machining. However, the production of the model by hand requires much labor and skill. The NC cutting work necessitates a complicated work program including exchange of the cutter or the shape of the edge thereof as well as countermeasures for abrasion thereof. Another problem of the NC cutting work is that finishing is often necessitated in order to remove differences in the level formed on the worked surface. It is now expected to develop a process for solving the problems of the conventional technique and producing models of complicated shapes for production of molds, profile control or diesinking electrical discharge machining and various articles of fixed form by an optical molding process.

Various properties are required of the optical molding resins such as excellent curing sensitivity to actinic radiation, high resolution in curing by actinic radiation, high ultraviolet transmission after curing, high γ-characters, small volume reduction upon curing, high mechanical strength of the curing product, excellent self-adhesion and excellent curing properties in an oxygen atmosphere.

Examples of known actinic radiation curable organic compounds include modified polyurethane methacrylate, oligoester acrylate, urethane acrylate, epoxy acrylate, photosensitive polyimides, and aminoalkyds described in Japanese Patent Laid-Open Nos. 247515/1985 and 237173/1989. The dimensional accuracy of moldings produced from these compounds is low, since the curing thereof by actinic radiation is insufficient due to the inhibition of curing by oxygen in the air and also since shrinkage upon curing thereof is high. Thus these compounds are not so suitable for use as a material for optical molding resin compositions.

The Derwent abstract of JP-A-59-087126 discloses a composition for moulding a lens, consisting of an epoxy (meth)acrylate, a compound with at least two allyl or allylidene groups, a compound with at least two mercapto groups and a radical polymerisation initiator.

The Derwent abstract of JP-A-59-087123 discloses the production of a lens by the addition of a radical polymerisation initiator to a polyvalent allyl compound having one or two benzene or naphthalene nuclei and a multi-functional thiol compound, pouring the mixture into a mould and hardening by heat or UV irradiation.

US-A-3701721 discloses a curable liquid composition consisting essentially of an aminoallyl compound which is obtainable by reaction of bisphenol A diglycidyl ether and diallyl amine, a polythiol and a monomeric acid of the formula RH₂C=CRCOOH (where R is H, CH₃, or C₂H₅) or a homo- or copolymer of such an acid.

US-A-4391686 teaches actinic radiation curable formulations, wherein the amount of a polythiol compound is defined as 0.01 to 30 parts by weight of polythiol compound based on 100 parts by weight of polyene compounds.

Serious handling problems are also extant with acrylate resins, due to skin irritation and odor when a polyfunctional monomer or a diluent is used in order to improve the reactivity thereof in the air.

An object of the present invention is to provide a resin composition suitable for use in an optical molding system with actinic radiation.

The optical molding resin composition of the present invention is characterized by comprising:
[1] an actinic radiation-curable radical-polymerizable organic composition comprising (1) one or more polythiol compounds and (2) one or more polyene compounds each having at least two actinic radiation-reactive carbon-to-carbon double bonds in the molecule, the polyene compound(s) being selected from urethane acrylates, polyester acrylates, polyether acrylates and alcohol acrylates, the equivalent ratio of the actinic radiation reactive carbon-to-carbon double bonds in the polyene compound(s) to the thiol groups in the polythiol compound(s) being 0.7 to 1.5, and
[2] an actinic radiation-sensitive radical polymerization initiator.

The polythiol compounds comprising the actinic radiation-curable, radical-polymerizable organic composition useful in the present invention include those of the following general formula (1):

A-(SH)_{q} (1)

wherein A represents a q-valent organic residue free from a unsaturated bonds reactive with an SH group, and q represents an integer of at least 2,
which have a molecular weight of 80 to 10,000 and a viscosity at 50 °C of nearly 0 to 10,000 P (1,000 Pa s). Preferred examples of the polythiol compounds include those synthesized by the esterification of thioglycolic acid, α-mercaptopropionic acid or β-mercaptopropionic acid with a polyhydric alcohol; aliphatic and aromatic polythiols such as ethanedithiol, propanedithiol, hexamethylenedithiol and xylylenedithiol; polythiols obtained by replacing a halogen atom of an alcohol/epihalohydrin adduct with a mercaptan group; and reaction products of a polyepoxy compound with hydrogen sulfide. The polyhydric alcohols which can be subjected to the esterification with the above-described thioglycolic acid and mercaptopropionic acid include ethylene glycol, diethylene glycol, triethylene glycol, polyethylene glycol, propylene glycol, dipropylene glycol, polypropylene glycol, 1,3-butanediol, 1,4-butanediol, 1,6-hexanediol, neopentyl glycol, bisphenol A, hydrogenated bisphenol A, bisphenol A / ethylene oxide adduct, bisphenol A / propylene oxide adduct, thiodiethanol, trimethylolpropane, glycerol, triethanolamine, pentaerythritol, dipentaerythritol, sorbitol, hydroquinone, pyrogallol, xylylene glycol, 4,4'-dihydroxydiphenylmethane, trishydroxyethyl isocyanurate, and bishydroxyethylhydantoin.

These polythiol compounds can be used singly or in the form of a mixture of two or more of them.

Preferred polyene compounds are those urethane acrylates obtained by reacting one or more hydroxyl group-containing polyesters or hydroxyl group-containing polyethers with a hydroxyl group-containing acrylic ester and an isocyanate and also those obtained by reacting a hydroxyl group-containing acrylic ester with an isocyanate.

Preferred hydroxyl group-containing polyesters usable herein are those obtained by the esterification of one or more polyhydric alcohols or alkylene oxide adduct(s) thereof with one or more polybasic acids. Examples of the polyhydric alcohols include 1,3-butanediol, 1,4-butanediol, 1,6-hexanediol, ethylene glycol, diethylene glycol, triethylene glycol, neopentyl glycol, polyethylene glycol, polypropylene glycol, trimethylolpropane, pentaerythritol, dipentaerythritol, bisphenol A, hydrogenated bisphenol A, thiodiethanol, glycerol, triethanolamine, sorbitol, hydroquinone, pyrogallol, xylene glycol, 4,4'-dihydroxydiphenylmethane, trishydroxyethyl isocyanurate, and bishydroxyethylhydantoin. Examples of the polybasic acids include succinic, adipic, sebacic, phthalic, hexahydrophthalic, trimellitic, and pyromellitic acids.

Preferred hydroxyl group-containing polyethers are those obtained by adding one or more alkylene oxides to a polyhydric alcohol. Examples of the polyhydric alcohols include 1,3-butanediol, 1,4-butanediol, 1,6-hexanediol, ethylene glycol, diethylene glycol, triethylene glycol, neopentyl glycol, polyethylene glycol, polypropylene glycol, trimethylolpropane, pentaerythritol, dipentaerythritol, bisphenol A, hydrogenated bisphenol A, thiodiethanol, glycerol, triethanolamine, sorbitol, hydroquinone, pyrogallol, xylylene glycol, 4,4'-dihydroxydiphenylmethane, trishydroxyethyl isocyanurate, and bishydroxyethylhydantoin. Examples of the alkylene oxides include ethylene oxide and propylene oxide.

Preferred hydroxyl group-containing acrylic esters include those obtained by the esterification of a polyhydric alcohol with acrylic acid. Examples of the polyhydric alcohol include 1,3-butanediol, 1,4-butanediol, 1,6-hexanediol, ethylene glycol, diethylene glycol, triethylene glycol, neopentyl glycol, polyethylene glycol, polypropylene glycol, trimethylolpropane, pentaerythritol, dipentaerythritol, bisphenol A, hydrogenated bisphenol A, thiodiethanol, glycerol, triethanolamine, sorbitol, hydroquinone, pyrogallol, xylylene glycol, 4,4'-dihydroxydiphenylmethane, trishydroxyethyl isocyanurate, and bishydroxyethylhydantoin. Among the hydroxyl group-containing acrylic esters, particularly preferred are those obtained by the esterification of an aliphatic polyhydric alcohol with acrylic acid. They include 2-hydroxyethyl acrylate and pentaerythritol triacrylate.

Examples of the isocyanates include monomeric polyisocyanate compounds such as dicyclohexylmethane 4,4′-diisocyanate, tolylene diisocyanate, diphenylmethane 4,4'-diisocyanate, xylylene diisocyanate, isophorone diisocyanate, and hexamethylene diisocyanate as well as trimers of tolylene diisocyanate and isophorone diisocyanate.

Preferred polyester acrylates are those obtained by reacting a hydroxyl group-containing polyester with acrylic acid.

Preferred hydroxyl group-containing polyesters usable herein are those obtained by the esterification of one or more polyhydric alcohols with one or more monobasic acids and/or polybasic acids and a phenol. Examples of the polyhydric alcohols include 1,3-butanediol, 1,4-butanediol, 1,6-hexanediol, ethylene glycol, diethylene glycol, triethylene glycol, neopentyl glycol, polyethylene glycol, polypropylene glycol, trimethylolpropane, pentaerythritol, dipentaerythritol, bisphenol A, hydrogenated bisphenol A, thiodiethanol, glycerol, triethanolamine, sorbitol, hydroquinone, pyrogallol, xylylene glycol, 4,4′-dihydroxydiphenylmethane, trishydroxyethyl isocyanurate, and bishydroxyethylhydantoin. Examples of the monobasic acids include formic, acetic, butylcarboxylic and benzoic acids. Examples of the polybasic acids include succinic, adipic, sebacic, phthalic, hexahydrophthalic, trimellitic, and pyromellitic acids. Examples of the phenols include phenol and p-nonylphenol.

Preferred polyether acrylates are those obtained by reacting a hydroxyl group-containing polyether with acrylic acid.

Preferred hydroxyl group-containing polyethers usable herein are those obtained by adding one or more alkylene oxides to a polyhydric alcohol. Examples of the polyhydric alcohol include 1,3-butanediol, 1,4-butanediol, 1,6-hexanediol, ethylene glycol, diethylene glycol, triethylene glycol, neopentyl glycol, polyethylene glycol, polypropylene glycol, trimethylolpropane, pentaerythritol, dipentaerythritol, bisphenol A, hydrogenated bisphenol A, thiodiethanol, glycerol, triethanolamine, sorbitol, hydroquinone, pyrogallol, xylylene glycol, 4,4′-dihydroxydiphenylmethane, trishydroxyethyl isocyanurate, and bishydroxyethylhydantoin. Examples of the alkylene oxides include ethylene oxide and propylene oxide.

Preferred alcohol acrylates are those obtained by reacting an aromatic or aliphatic alcohol having at least one hydroxyl group in the molecule or an alkylene oxide adduct thereof with acrylic acid. Examples of them include 2-ethylhexyl acrylate, 2-hydroxyethyl acrylate, 2-hydroxypropyl acrylate, isoamyl acrylate, lauryl acrylate, stearyl acrylate, isooctyl acrylate, tetrahydrofurfuryl acrylate, isobornyl acrylate, benzyl acrylate, 1,3-butanediol diacrylate, 1,4-butanediol diacrylate, 1,6-hexanediol diacrylate, diethylene glycol diacrylate, triethylene glycol diacrylate, neopentyl glycol diacrylate, polyethylene glycol diacrylate, polypropylene glycol diacrylate, trimethylolpropane triacrylate, pentaerythritol triacrylate, and dipentaerythritol hexaacrylate.

The acrylate resin preferably has a viscosity at 50 °C of nearly 0 to 10,000 P (1,000 Pa s), more preferably 1 to 1,000 P (0.1 to 100 Pa s).

The curing of the acrylate resin is inhibited by oxygen in the air. Usually the reaction velocity is increased by addition of a low-molecular acrylate monomer such as a styrene monomer. However, many of the low-molecular acrylate monomers seriously irritate the skin.

Since the actinic radiation-curable organic composition which comprises the optical molding resin composition of the present invention is produced from a polyene compound having at least two actinic radiation-reactive carbon-to-carbon double bonds in the molecule and a polythiol compound, the curing of this compound is not inhibited by oxygen in the air. Therefore, the use of a low-molecular acrylate monomer is unnecessary and an acrylate resin which does not seriously irritate the skin can be used. The molecular weight of such acrylate resins which do not seriously irritate the skin is preferably at least 100, more preferably at least 300, and most preferably at least 500.

The polyene compounds can be used in the composition of the invention either singly or in the form of a mixture of two or more of them.

The term "actinic radiation-sensitive radical polymerization initiator" herein refers to a compound capable of releasing a substance capable of initiating radical polymerization by irradiation with actinic radiation. Such compounds include ketone, azide, azo, diazo and peroxide compounds. Examples of the ketone compounds include diethoxyacetophenone, 2-hydroxymethyl-1-phenylpropan-1-one, 4'-isopropyl-2-hydroxy-2-methylpropiophenone, 2-hydroxy-2-methylpropiophenone, p-dimethylamino-acetophenone, p-tert-butyldichloroacetophenone, p-tert-butyltrichloroacetophenone, p-azidobenzalacetophenone, benzoin, benzoin methyl ether, benzoin ethyl ether, benzoin isopropyl ether, benzoin n-butyl ether, benzoin isobutyl ether, benzil, benzil dimethyl ketal, benzyl β-methoxyethyl acetal, 1-hydroxycyclohexyl phenyl ketone, benzophenone, methyl o-benzoylbenzoate, Michler's ketone, 4,4'-bisdiethylaminobenzophenone, 4,4'-dichlorobenzophenone, thioxanthone, 2-methylthioxanthone, 2-ethylthioxanthone, 2-chlorothioxanthone, and 2-isopropylthioxanthone. Examples of the azide compounds include 4,4'-diazidostilbene and p-phenylenebisazide. Examples of the azo compounds include 2,2'-azobisisobutyronitrile and 2,2′-azobisdimethylvaleronitrile. An example of the diazo compounds is diazoaminobenzene. The peroxide compound include di-tert-butyl peroxide.

Among these actinic radiation-sensitive radical polymerization initiators, the ketones are preferably used.

These actinic radiation-sensitive radical polymerization initiators can be used singly or in combination of two or more of them depending on the desired properties.

Now, the description will be made on the relative amounts of the components of the optical molding resin composition of the present invention.

The optical molding resin composition of the present invention comprises, as the essential components, an actinic radiation-curable, radical-polymerizable organic compound comprising (1) one or more polythiol compounds and (2) one or more polyene compounds as defined above, and an actinic radiation-sensitive radical polymerization initiator.

The ratio of the polythiol compound to the polyene compound is selected so that the equivalent ratio of the actinic radiation-reactive carbon-to-carbon double bonds in the polyene compound(s) to the thiol groups in the polythiol compound(s) will be 0.7 to 1.5. Preferred results are obtained particularly when the ratio is around 1.0. When the equivalent ratio of the carbon-to-carbon double bonds in the polyene compound(s) to the thiol groups in the polythiol compound(s) is less than 0.7 or higher than 1.5, the actinic radiation curability of the composition may be seriously impaired.

The amount of the actinic radiation-sensitive radical polymerization initiator added can be suitably selected depending on the kind thereof. The preferred amount thereof is, however, 0.1 to 20 parts by weight for 100 parts by weight of the actinic radiation-curable, radical-polymerizable organic composition. When the amount of the initiator added is less than 0.1 part by weight or more than 20 parts by weight for 100 parts by weight of the organic composition, the actinic radiation curability of the composition is seriously impaired.

The actinic radiation-sensitive radical polymerization initiators can be used singly or in combination of two or more of them, the selection depending on the desired properties.

Thermosetting properties can be imparted to the optical molding resin composition of the present invention by adding a radical-forming agent. The radical-forming agent includes peroxides, azo compounds and combinations of a peroxide with a decomposition accelerator.

The peroxides include ketone peroxides such as methyl ethyl ketone peroxide and cyclohexanone peroxide; diacyl peroxides such as benzoyl peroxide and lauroyl peroxide; hydroperoxides such as tert-butyl hydroperoxide and cumene hydroperoxide; dialkyl peroxides such as di-tert-butyl peroxide and dicumyl peroxide; alkyl peresters such as tert-butyl perbenzoate; and inorganic peroxides such as lead peroxide and manganese peroxide. The azo compounds include 2,2′-azobisisobutyronitrile, 2,2′-azobisdimethylvaleronitrile and 2,2′-azobis-(2,3,3-trimethylbutyronitrile). The peroxides can be used in combination with a decomposition accelerator such as a salt of a heavy metal, e.g. cobalt, manganese, iron or copper, or a tertiary amine, e.g. dimethylaniline or dimethyl-p-toluidine.

The amount of the radical-forming agent can be suitably selected depending on the kind thereof. It is preferably not more than 50 parts by weight, particularly not more than 30 parts by weight, for 100 parts by weight of the mixture of the polythiol compound and the polyene compound. When the amount of the radical-forming agent is more than 50 parts by weight for 100 parts by weight of the actinic radiation-curable, radical-polymerizable organic composition, the actinic radiation curability thereof is seriously impaired.

The radical-forming agent can be used singly or in a combination of two or more of them the selection depending on the intended properties.

The actinic radiation curability of the optical molding resin composition of the present invention can be accelerated by addition of an accelerator. The accelerators are preferably amine compounds. Examples of them include monoethanolamine, diethanolamine, triethanolamine, 4,4′-bisdiethylaminobenzophenone, ethyl 4-dimethylaminobenzoate, isopentyl 4-dimethylaminobenzoate and 2-(dimethylamino)ethyl benzoate; high-molecular amine compounds produced from an epoxy resin and an amine compound; and compounds derived from the above-described amine compounds, such as triethanolamine triacrylate.

The amount of the accelerator can be suitably selected depending on the kind thereof. It is preferably not more than 50 parts by weight for 100 parts by weight of the mixture of the polythiol compound and the polyene compound. It is more preferably 30 parts by weight or less. When the amount of the accelerator is more than 50 parts by weight for 100 parts by weight of the actinic radiation-curable, radical-polymerizable organic compound, the actinic radiation curability thereof may be seriously impaired.

The accelerator can be used singly or in a combination of two or more of them, the selection depending on the desired properties.

The pot life of the optical molding resin composition of the present invention can be prolonged by adding a stabilizer thereto.

Examples of the stabilizer include quaternary ammonium chlorides such as benzyltrimethylammonium chloride, diethylhydroxyamine, cyclic amides, nitrile compounds, substituted ureas, benzothiazole, 4-amino-2,2,6,6-tetramethylpiperidine, bis(1,2,2,6,6-pentamethyl-4-piperidinyl) sebacate, organic acids such as lactic, oxalic, citric, tartaric and benzoic acids, hydroquinone and its alkyl ethers, tert-butylpyrocatechol, phosphorus acid compounds such as tridecyl phosphite, organic phosphines, phosphites, copper compounds such as copper naphthenate and trichloroethyl phosphite / cuprous chloride adduct, and iron and manganese caprylates, naphthenates and sulfoxides.

The pot life of the optical molding resin composition of the present invention at 20 °C in a dark place is 6 months or more even when no stabilizer is incorporated therein and such a long pot life is usually enough in practice. The pot life can be further prolonged to 12 months or longer by incorporating a stabilizer therein. The amount of the stabilizer can be suitably selected depending on the kind thereof. It is preferably not more than 50 parts by weight for 100 parts by weight of the mixture of the polythiol compound and polyene compound. More preferably, the amount of the stabilizer is not more than 30 parts by weight. When the amount of the stabilizer added is more than 50 parts by weight for 100 parts by weight of the actinic radiation-curable, radical-polymerizable organic compound, the actinic radiation curability thereof may be seriously impaired.

The stabilizer can be used singly or in a combination of two or more depending on the desired properties.

The pot life of the optical molding resin composition of the present invention under fluorescent lighting can be further prolonged by incorporating an ultraviolet absorber thereinto.

Examples of the ultraviolet absorber include benzophenone compounds such as 2-hydroxybenzophenone, 2,4-dihydroxybenzophenone, 2-hydroxy-4-methoxybenzophenone, 2,2',4-trihydroxybenzophenone, 2,2'-dihydroxy-4-methoxybenzophenone, and 2,2',4,4'-tetrahydroxybenzophenone; salicylate compounds such as phenyl salicylate, 2,4-di-tert-butylphenyl 3,5-di-tert-butyl-4-hydroxybenzoate; benzotriazole compounds such as (2'-hydroxyphenyl)benzotriazole, (2'-hydroxy-5'-methylphenyl)benzotriazole and (2'-hydroxy-3'-tert-butyl-5'-methylphenyl)-5-chlorobenzotriazole; acrylonitrile compounds such as ethyl 2-cyano-3,3-diphenylacrylate and methyl 2-carbomethoxy-3-(p-methoxy)acrylate; metal complex compounds such as nickel [2,2'-thiobis(4-tert-octyl) phenolate] n-butylamine, nickel dibutyl dithiocarbamate and cobalt dicyclohexyl dithiophosphate; and hindered amine compounds such as bis(2,2,6,6-tetramethylpiperidinyl-4) sebacate.

The optical molding resin composition of the present invention has a pot life under fluorescent lighting at 20 °C of as long as two weeks or more even when no ultraviolet absorber is used, which in practice is usually enough. The pot life can be further prolonged to exceed one month by adding an ultraviolet absorber thereto. The amount of the ultraviolet absorber depends on the kind thereof but is preferably 50 parts by weight or less, more preferably 30 parts by weight or less, for 100 parts by weight of the mixture of the polythiol compound and the polyene compound. When the amount of the ultraviolet absorber added is more than 50 parts by weight for 100 parts by weight of the actinic radiation-curable, radical-polymerizing organic composition, the actinic radiation curability thereof may be seriously impaired.

The ultraviolet absorber can be used singly or in a combination of two or more of the selection depending on the desired properties.

The optical molding resin composition of the present invention can contain, if desired, suitable amounts of a colorant such as a pigment or dye, filler, an antifoaming agent, a leveling agent, a thickening agent, a flame retardant, a plasticizer, a solvent, and a modifying resin, so far as the effect of the invention is not impaired.

The viscosity of the composition of the present invention is preferably not higher than 5,000 cps (5 Pa s) and more preferably not higher than 2,000 cps (2 Pa s), at ambient temperature. When the viscosity of the composition is excessively high, a long molding time is necessary and, therefore, the workability is reduced.

Since the volume of the molding resin composition is usually reduced upon curing, it is necessary to minimize the shrinkage from the viewpoint of dimensional accuracy. The volume reduction of the composition of the present invention upon curing is preferably 5 % or less and more preferably 3% or less.

In an embodiment of the process of the present invention, the optical molding resin composition of the present invention is placed in a vessel and actinic radiation necessary for curing from a light guide is selectively aplied by relative movement of the vessel and the light guide to form a solid of a desired shape as described in Japanese Patent Laid-Open No. 247515/1985. The actinic radiation usable for curing the composition of the present invention may, for example, be ultraviolet rays, X-rays, radioactive radiation or high-frequency radiation. Among these, ultraviolet rays having a wavelength range of 1,800 to 5,000 Å (180 to 500 nm) are preferred from the economic viewpoint. The light sources usable herein include an ultraviolet laser, a mercury lamp, a xenon lamp, a sodium lamp and an alkali metal lamp. A particularly preferred light source is a laser light source which is capable of elevating the energy level to reduce the molding time and also capable of improving the molding accuracy, taking advantage of its excellent concentrating capacity. A point source which concentrates ultraviolet rays from various lamps such as a mercury lamp is also effective. To selectively apply the actinic radiation necessary for the curing to the resin composition, the resin composition is irradiated with two or more luminous fluxes each having a wavelength twice as long as that suitable for the curing of the resin composition and a uniform phase in such a manner that they cross each other in the resin to obtain actinic radiation necessitated for curing the resin composition by two-photon absorption, and the intersection of the lights is moved. The luminous flux having a uniform phase can be obtained with, for example, laser beam.

Since the resin composition of the present invention is cured by radical polymerization induced by the actinic radiation, it can be heated to 30 to 100 °C during the irradiation with the actinic radiation in order to effectively accelerate the cross-linking curing reaction depending on the kind of the radical-polymerizable organic composition used. Further the resulting molding can be subjected to heat treatment at a temperature of 40 to 100 °C or ultraviolet irradiation treatment with a mercury lamp to obtain a molding having higher mechanical strength.

The optical molding resin composition of the present invention provides an excellent starting material for producing a three-dimensional model by piling layers. Thus, a model can be produced without using any mold. Further, a model of any shape having, for instance, a free curved surface, can be produced by docking with CAD/CAM. The industrial value of the composition is thus quite high. The resin composition of the present invention can be used widely for the production of, for instance, models for inspecting the apparent design of an article in the course of designing it, models for checking objectionable points of combination parts, die models for production of molds and copying models for the production of molds.

More specifically, the composition can be used for the production of models having curved surfaces such as the parts of automobiles, electronic and electric components, furniture, building structures, toys, vessels, castings and dolls or it can be processed into an intended article.

According to the present invention, an optical molding resin composition having excellent curability upon irradiation with actinic radiation and only a low shrinkage on curing can be obtained and the curing of this composition is not inhibited by oxygen in the air.

As for ease of handling, the optical molding resin composition of the present invention can be handled quite safely, since curing thereof is not inhibited by oxygen and neither polyfunctional monomer nor diluent having skin-irritating properties or strong smell is used for producing it. In contrast acrylate resins of the prior art have an inherent problem in that since a polyfunctional monomer or diluent is used in order to increase the reactivity thereof in the air, they have severe skin-irritating properties and a strong smell.

The present invention will be further illustrated by the following examples. In the following Examples and Comparative Examples, parts are given by weight.

### Example 1

Dipentaerythritol hexaacrylate as the polyene compound was mixed with pentaerythritol tetrakisthioglycolate as the polythiol compound in such amounts that the equivalent ratio of the carbon-to-carbon double bond to the thiol group would be 1.0. 5.0 parts by weight of benzophenone as the actinic radiation-sensitive radical polymerization initiator was mixed in 100 parts by weight of the mixture to obtain an optical molding resin composition.

A cone having a base diameter of 12 mm, a height of 15 mm and a thickness of 0.5 mm was produced from the resin composition by an optical shaping experiment system comprising a three-dimensional NC (numerically controlled) table having a vessel for the resin composition placed thereon, a helium cadmium laser and a controller mainly comprising an optical system and a personal computer. The conical product was free from deformation and had excellent molding accuracy and excellent mechanical strength. The molding time was 40 min. The molding accuracy was determined as follows: the diameter of the bottom of the mold was measured at 10 arbitrary places and the scatter thereof was determined to find the average error from the mean value (hereinafter referred to as "accuracy") was 0.5 %.

### Example 2

A mixture of 50 parts by weight of hexamethylene diisocyanate / 2-hydroxyethyl acrylate urethane acrylate and 50 parts by weight of polyethylene glycol diacrylate as the polyene compounds was mixed with pentaerythritol tetrakisthioglycolate as the polythiol compound in such amounts that the equivalent ratio of the carbon-to-carbon double bonds to the thiol group would be 1.0. 5.0 parts by weight of benzil dimethyl ketal as the actinic radiation sensitive radical polymerization initiator was mixed in 100 parts by weight of the mixture to obtain an optical molding resin composition.

A hanging bell-shaped molding was produced from the resin composition by the laser beam shaping experiment system employed in Example 1. The molding was free from deformation and had a quite high molding accuracy and high mechanical strength. This resin composition having a viscosity of as low as 0.3 Pa s (300 cps) could be easily handled and had excellent curability upon irradiation with laser beams. The molding time was 30 min. The same cone as that of Example 1 was produced in order to compare the respective molding time and molding accuracy. The molding time was 40 min and the accuracy was 0.3 %.

### Comparative Example 1

100 parts of dipentaerythritol hexaacrylate was mixed with 5 parts of benzophenone to obtain an actinic radiation-curable polymerizable composition. The same cone as that produced in Example 1 was produced from the composition by the same laser beam shaping experiment system used in Example 1. The curing velocity upon irradiation with laser beams was low, since the curing was inhibited by oxygen in the air, and the molding time was as long as 120 min. The obtained molding was deformed by shrinkage on curing and had a low accuracy of 5 %.

### Comparative Example 2

70 parts of dipentaerythritol hexaacrylate, 30 parts of trimethylolpropane triacrylate and 10 parts of benzophenone were mixed together to obtain an actinic radiation-curable polymerizable composition. A cone similar to that of Example 1 was produced from the composition by the same laser beam shaping experiment system as that of Example 1. Although the molding time was shorter than that of Comparative Example 1, since the low-molecular monomer (trimethylolpropane triacrylate) was incorporated thereinto and the amount of the radical polymerization initiator (benzophenone) was increased to 10 parts to accelerate the curing, the molding time was still as long as 80 min, since the curing was inhibited by oxygen in the air. The molding accuracy was as bad as 15 %, since curing on shrinkage was increased as the curing rate was increased.

## Claims

1. An optical molding resin composition characterized by comprising:
[1] an actinic radiation-curable radical-polymerizable organic composition comprising (1) one or more polythiol compounds and (2) one or more polyene compounds each having at least two actinic radiation-reactive carbon-to-carbon double bonds in the molecule, the polyene compound(s) being selected from urethane acrylates, polyester acrylates, polyether acrylates and alcohol acrylates, the ratio of the actinic radiation reactive carbon-to-carbon double bonds in the polyene compound(s) to the thiol groups in the polythiol compound(s) being 0.7 to 1.5, and
[2] an actinic radiation-sensitive radical polymerization initiator.

2. A composition according to claim 1, in which the said ratio is around 1.

3. A composition according to claim 1 or 2, in which the actinic radiation-sensitive radical polymerization initiator [2] is present in an amount of from 0.1 to 20.0 parts by weight for each 100 parts by weight of the actinic radiation-curable radical-polymerizable organic composition [1].

4. A method of forming a model or a mold comprising curing an optical molding resin composition according to any preceding claim.

## Patentansprüche

1. Optische Formharzzusammensetzung, dadurch gekennzeichnet, daß sie
[1] eine durch aktinische Strahlung härtbare, radikalisch polymerisierbare organische Zusammensetzung, die (1) eine oder mehr Polythiolverbindungen und (2) eine oder mehr Polyenverbindungen mit jeweils wenigstens zwei gegenüber aktinischer Strahlung reaktionsfähigen Kohlenstoff-Kohlenstoff-Doppelbindungen im Molekül umfaßt, wobei die Polyenverbindung(en) aus Urethanacrylaten, Polyesteracrylaten, Polyetheracrylaten und Alkoholacrylaten ausgewählt ist (sind) und das Verhältnis der gegenüber aktinischer Strahlung reaktionsfähigen Kohlenstoff-Kohlenstoff-Doppelbindungen in der (den) Polyenverbindung(en) zu den Thiolgruppen in der (den) Polythiolverbindung(en) 0,7 zu 1,5 ist, und
[2] einen gegenüber aktinischer Strahlung empfindlichen Radikalpolymerisationsinitiator umfaßt.

2. Zusammensetzung gemäß Anspruch 1, bei welcher das Verhältnis ungefähr 1 ist.

3. Zusammensetzung gemäß Anspruch 1 oder 2, bei welcher der gegenüber aktinischer Strahlung empfindliche Radikalpolymerisationsinitiator [2] in einer Menge von 0,1 bis 20 Gewichtsteile auf jeweils 100 Gewichtsteile durch aktinische Strahlung härtbare, radikalisch polymerisierbare organische Zusammensetzung [1] zugegen ist.

4. Verfahren zum Bilden einer Abformung oder eines Formstücks, welches das Härten einer optischen Formharzzusammensetzung gemäß einem der vorangehenden Ansprüche umfaßt.

## Revendications

1. Composition de résine pour moulage optique, caractérisée en ce qu'elle comprend :
[1] une composition organique polymérisable par une réaction radicalaire, durcissable par une radiation actinique, comprenant (1) un ou plusieurs composés polythiols et (2) un ou plusieurs composés polyènes, chacun ayant au moins deux liaisons carbone-à-carbone doubles réactives à une radiation actinique dans la molécule, le(s) composé (s) polyène(s) étant choisi(s) parmi les acrylates d'uréthane, les acrylates de polyester, les acrylates de polyéther et les acrylates d'alcool, le rapport des liaisons carbone-à-carbone doubles réactives à une radiation actinique dans le(s) composé(s) polyène(s) aux groupes thiols dans le(s) composé (s) polythiol(s) étant de 0,7 à 1,5, et
[2] un initiateur de polymérisation radicalaire sensible à une radiation actinique.

2. Composition selon la revendication 1, dans laquelle ledit rapport est d'environ 1.

3. Composition selon la revendication 1 ou 2, dans laquelle l'initiateur de polymérisation radicalaire sensible à une radiation actinique [2] est présent en une proportion de 0,1 à 20,0 parties en poids pour 100 parties en poids de la composition organique polymérisable par une réaction radicalaire, durcissable par une radiation actinique [1] .

4. Procédé de formation d'un modèle ou d'un moule, comprenant le durcissement d'une composition de résine pour moulage optique selon l'une quelconque des revendications précédentes.
